# EUROPÄISCHE PATENTSCHRIFT

(11) **EP 0 655 428 B1**
(45) Veröffentlichungstag und Bekanntmachung des Hinweises auf die Patenterteilung: **06.05.1998**
(21) Anmeldenummer: 94115381.9
(22) Anmeldetag: 29.09.1994
(51) Int. Cl.: C05F 17/02

(54) **Vorrichtung zum Umsetzen von Kompostmieten**
Machine for turning over compost heaps
Machine pour retourner les tas de compost

(30) Priorität: 29.11.1993 DE 4340612
(43) Veröffentlichungstag der Anmeldung: 31.05.1995
(73) Patentinhaber: Heissenberger & Pretzler Ges.m.b.H., 8020 Graz (AT)
(72) Erfinder: Pretzler, Rudolf, Dipl.-Ing., A-8600 Bruck/Mur (AT); Heissenberger, Josef, A-8045 Graz (AT)
(74) Vertreter: Laufhütte, Dieter, Dr.-Ing.

(56) Entgegenhaltungen:
- FR-A- 2 331 535
- US-A- 4 475 450

## Beschreibung

Die Erfindung betrifft eine Vorrichtung zum Umsetzen von Kompostmieten mit einer quer zur Fahrtrichtung angeordneten rotierenden Umsetzwalze zum Aufnehmen und Hochschleudern des Kompostes.

Derartige Vorrichtungen sind bereits in mehrfachen Bauausführungen bekannt. Eine Bauausführung ist beispielsweise in der DE-42 11 842 C1 beschrieben. Mittels dieser bekannten Vorrichtungen wird über die drehbar antreibbare Umsetzwalze eine in Dreiecksform abgelegte Kompostmiete aufgenommen und derart hochgeschleudert, daß der Kompost sich hinter der Walze wieder in der gewünschten Dreiecksform aufeinanderhäuft. Das Gehäuse der Vorrichtung oberhalb der Walze weist einen entsprechenden Freiraum auf, durch den der hochgeworfene Kompost geworfen werden kann.

Da es für die Funktionsweise dieser Vorrichtung wesentlich ist, daß die Walze zum Aufnehmen und Hochschleudern des Kompostes möglichst nahe an der Bodenfläche entlang läuft, wird die Walze bei auftretenden Bodenunebenheiten entsprechend der Höhe der jeweiligen Bodenunebenheit angehoben. Dies kann dadurch erfolgen, daß die Walze über einen entsprechenden Verschiebemechanismus innerhalb des Gehäuses verschoben wird. Alternativ dazu kann aber auch, wie in der DE 42 11 842 C1 beschrieben, die Umsetzwalze an sich unverschiebbar im Fahrzeuggehäuse gelagert sein, während das gesamte Gehäuse, das mit den Rädern der Vorrichtung jeweils über austeleskopierbare Stützen verbunden ist, hochgehoben bzw. abgesenkt wird.

Allen Umsetzmaschinen mit Umsetzwalze haftet aber das Problem an, daß es schwierig ist, das gesamte Kompostmaterial vom Boden aufzunehmen. Das ist dadurch bedingt, daß das Absenken der Walze auf exaktes Bodenniveau in der Praxis kaum erreicht wird. Dadurch bleibt bei jedem Umsetzvorgang eine Restschicht liegen. Diese Restschicht hat zwar nur eine geringe Dichte, wirkt sich aber auf den Kompostierungsprozeß nachteilig, beispielsweise durch unerwünscht große Geruchsentwicklung aus.

Aus der FR-A-2 331 535 ist eine gattungsgemäße Vorrichtung zum Umsetzen von Komposmieten mit einer quer zur Fahrtrichtung angeordneten, rotierenden Umsetzwalze zum Aufnehmen und Hochschleudern des Kompostes, wobei in Fahrtrichtung gesehen hinter der Umsetzwalze und über ihre Länge verlaufend ein Schild angeordnet ist, über das auf dem Boden liegengebliebener Kompost zusammenschiebbar und auf die Umsetzwalze führbar ist. Als nachteilig bei dieser Vorrichtung wird angesehen, daß das Schild starr an der Vorrichtung befestigt ist, so daß hier ein Abstand zwischen der Bodenfläche und dem unteren Ende des Schildes vorgesehen ist, so daß der Schild nicht auf der Bodenfläche schleift. Daher kann dieses Schild nicht sämtlichen, auf dem Boden liegengebliebenen Kompost aufnehmen. Es ist gemaß der dort beschriebenen Vorrichtung auch nicht möglich, quer zur Fahrtrichtung der Vorrichtung verlaufende Bodenunebenheiten wirksam auszugleichen, da das Schild über seine gesamte, sich quer zur Fahrtrichtung erstreckende Länge einstückig ausgebildet ist.

Aufgabe der Erfindung ist es daher, die vorbekannte Vorrichtung derart weiterzubilden, daß das Kompostmaterial beim Umsetzen möglichst vollständig erfaßt werden kann.

Erfindungsgemäß ist diese Aufgabe ausgehend von einer gattungsgemäßen Vodrrichtung durch die kennzeichnenden Merkmale des Anspruchs 1 gelöst. Demnach wird bei einer bekannten Vorrichtung zum Umsetzen von Kompostmieten zusätlich in Fahrtrichtung gesehen hinter der Umsetzwalze und über ihre Länge verlaufend ein Schild schwenkbar angeordnet, über das auf dem Boden liegengebliebener Kompost zusammenschiebbar und auf die Umsetzwalze führbar ist. Ferner ist das Schild über seine Länge wenigstens einmal geteilt, wobei jedes Schildsegment für sich schwenkbar aufgehängt ist. Durch diese Teilung des Schildes in Schildsegmente wird eine bessere Anpassung dieses zusätzlichen Schildes an Bodenunebenheiten über die Länge der Umsetzwalze ermöglicht.

In vorteilhafter Weise ist das Schild in einem spitzen Winkel zur Bodenfläche ausgerichtet. Die Ausrichtung im spitzen Winkel kann dadurch erreicht werden, daß das Schild in einem Rahmen schwenkbar angeordnet ist und daß der Rahmen mindestens einen Anschlag aufweist, der die Schwenkbewegung des Schildes zum Boden hin begrenzt. Nach oben hin, kann dann das Schild verschwenkt werden, wobei der Verschwenkweg dadurch nach oben hin begrenzt ist, daß das freie Ende des Schildes sich an die rotierende Umsetzwalze anlegt.

Der Auflagedruck des Schildes wird durch sein Eigengewicht bestimmt. Gemäß einer vorteilhaften Ausführungsform kann der Auflagedruck allerdings durch entsprechend angreifende Federn weiter erhöht werden.

Die seitlichen Kannten des schwenkbar angeordneten Schildes sind seitlich durch Schutzbleche geschützt, die ebenfalls schwenkbar im Rahmen aufgehängt sind. Dabei können die Schutzbleche um eine Achse schwenkbar gelagert sein, die in Fahrtrichtung vor der Umsetzwalze liegt. Die Verschwenkbarkeit dieser Schutzbleche wird durch entsprechende Anschläge, die durch den Fahrzeugrahmen gebildet werden können, begrenzt.

Weitere Einzelheiten und Vorteile der Erfindung werden anhand von in der Zeichnung dargestellten Ausführungsbeispielen näher erläutert. Es zeigen:
- Figur 1:: eine schematische Seitenansicht, teilweise geschnitten, einer ersten Ausführungsform der erfindungsgemäßen Vorrichtung,
- Figur 2:: eine Detailansicht der Ausführungsform gemäß Figur 1,
- Figur 3:: ein Detail X, wie es in Figur 1 durch strichpunktierte Linie gekennzeichnet ist, in vergrößerter Darstellung,
- Figur 4:: eine Draufsicht auf ein freigelegtes Teil der Ausführungsform gemäß Figur 1 und
- Figur 5:: eine weitere Ausführungsform der Erfindung, bei der ein Anhänger zum Versetzen der Kompostmiete angehängt ist.

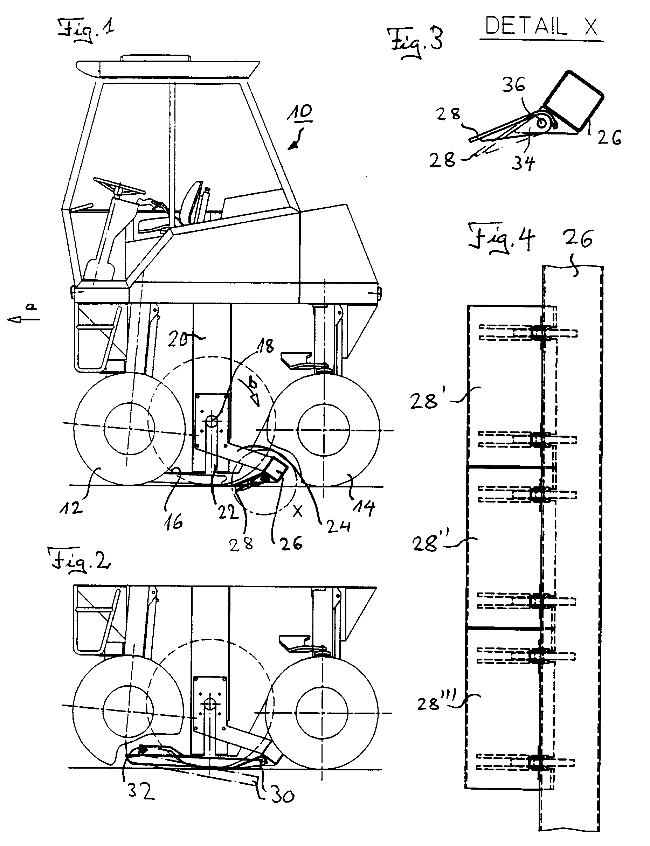

Die in Figur 1 dargestellte Ausführungsform der Vorrichtung 10 zum Umsetzen von Kompostmieten ist über zwei Radpaare 12 und 14 und einen entsprechenden, hier nicht näher dargestellten Antrieb verfahrbar.

Die Fahrtrichtung ist in Figur 1 durch den Pfeil a angegeben. Zwischen den Radpaaren 12 und 14 ist über die Breite der Vorrichtung 10 eine in Pfeilrichtung b rotierende Umsetzwalze 16 angeordnet. Die Umsetzwalze 16 ist um eine Drehachse 18 in Trägern 20 drehbar angeordnet. Zur Anpassung an Bodenunebenheiten kann die Umsetzwalze 16 innerhalb des Langlochs 22 der Träger 20 über geeignete Verschiebeeinrichtungen verschoben werden. Alternativ hierzu ist es auch möglich, daß die Umsetzwalze 16 starr angeordnet ist, während die gesamte Vorrichtung 10 über austeleskopierbare Stützen der Radpaare 12 und 14 in der Höhe verschoben wird. Am Träger 20 sind Tragbleche 24 angeordnet, zwischen denen ein eine Traverse bildender Träger 26 angeordnet ist. Die Tragbleche 24 und der Träger 26 bilden einen Rahmen, in dem ein Schild 28 um eine rahmenfeste Achse 36 verschwenkbar angeordnet ist. Im Detail X (vergl. Figur 3) ist erkenntlich, daß das Schild 28 aus einem Blech besteht, das in seiner Schwenkbewegung zum Boden hin durch einen festen Anschlag 34 begrenzbar ist. Diese unterste Position ist in Figur 3 durch die strichpunktierte Linie des Blechs 28 angedeutet. Das Schild 28 ist in Fahrtrichtung a gesehen hinter der Umsetzwalze 16 und über ihre Länge verlaufend angeordnet. Das Schild 28 schließt, wie in Figur 1 deutlich dargestellt, mit dem Boden einen spitzen Winkel ein. Hierdurch ist gewährleistet, daß der von der Walze 16 nicht erfaßte und hochgeschleuderte Kompost, der auf dem Boden liegengeblieben ist, von dem hinter der Umsetzwalze 16 über dem Boden schleifenden Schild erfaßt wird, zusammengeschoben wird und dadurch von der Umsetzwalze wieder erfaßbar ist. Ein die Schwenkbewegung nach oben, d. h. vom Boden weggerichtet, festlegender Anschlag für das Blech 28 kann wahlweise vorgesehen werden. Er ist aber nicht notwendig, da sich das Blech 28 an die in Pfeilrichtung b rotierende Umsetzwalze 16 anlegt, wenn es nach oben verschwenkt wird.

In Figur 2 ist eines von zwei schwenkbar um eine Achse 32 angeordneten seitlichen Schutzblechen 30 dargestellt. Die Schwenkachse 32 ist in Fahrtrichtung a vor der Umsetzwalze 16 gehäusefest angeordnet. Die Schwenkbewegung der Schutzbleche 30, die in Figur 2 einmal durch die durchgezogene und einmal durch die strichpunktierte Linie dargestellt ist, kann über gehäusefeste Anschläge in seiner Schwenkbewegung beschränkt werden.

Aus der Darstellung gemäß Figur 4 ergibt sich, daß das über die Länge der Umsetzwalze 16 verlaufende Schild 28 in drei Schildsegmente 28', 28'' und 28''' aufgeteilt ist, die jeweils an dem die Traverse bildenden Träger 26 angelenkt sind.

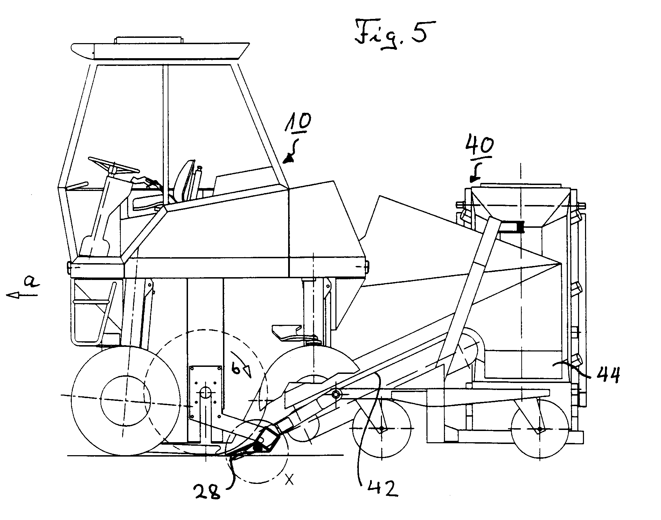

In Figur 5 ist eine Ausführungsvariante der erfindungsgemäßen Vorrichtung 10 gezeigt, bei der ein Anhänger 40 angekoppelt ist. Dieser Anhänger 40 dient zum seitlichen Versetzen der umzusetzenden Kompostmiete. Die von der Umsetzwalze 16 erfaßte und entgegen der Fahrtrichtung a geschleuderte Kompostmiete wird auf ein Förderband 42 des Anghängers 40 geschleudert und von dort auf ein quer zur Fahrtrichtung verlaufendes Transportband 44 übergeben, das den umzusetzenden Kompost seitwärts transportiert, wo er dann in einer neuen Dreiecksmiete abgelegt wird, auch in dieser Ausführungsform ist das zuvor beschriebene Schild zur Aufnahme der auf dem Boden verbliebenen Kompostschicht vorhanden.

## Patentansprüche

1. Vorrichtung zum Umsetzen von auf einer Bodenfläche aufliegenden Kompostmieten
mit einer quer zur Fahrtrichtung angeordneten rotierenden Umsetzwalze (16) zum Aufnehmen des Kompostes, wobei in Fahrtrichtung (a) gesehen hinter der Umsetzwalze und über ihre Länge verlaufend ein Schild (28) angeordnet ist,
dadurch gekennzeichnet,
daß das Schild (28) derart schwenkbar gelagert ist, daß ein freies Ende des Schildes (28) auf der Bodenfläche schleift, wodurch auf der Bodenfläche liegengebliebener Kompost zusammenschiebbar und von der Umsetzwalze (16) erfaßbar ist, und
daß das Schild (28) über seine Länge wenigstens einmal geteilt ist und daß jedes Schildsegment (28', 28'', 28''') für sich schwenkbar gelagert ist.

2. Vorrichtung nach Anspruch 1, dadurch gekennzeichnet, daß das Schild (28) in einem spitzen Winkel zur Bodenfläche ausgerichtet ist.

3. Vorrichtung nach Anspruch 1 oder 2, dadurch gekennzeichnet, daß das Schild in einem Rahmen (26) schwenkbar angeordnet ist und daß der Rahmen (26) mindestens einen Anschlag (34) aufweist, der die Schwenkbewegung des Schildes (28) zum Boden hin begrenzt.

4. Vorrichtung nach einem der Ansprüche 1 bis 3, dadurch gekennzeichnet, daß das Schild (28) belastende Federn zur Erhöhung des Auflagedrucks aufweist..

5. Vorrichtung nach einem der Ansprüche 1 bis 4, dadurch gekennzeichnet, daß das Schild (28) seitlich durch Schutzbleche (30) abgedeckt ist..

6. Vorrichtung nach Anspruch 5, dadurch gekennzeichnet, daß die Schutzbleche (30) jeweils um eine Achse schwenkbar gelagert sind, die in Fahrtrichtung vor der Umsetzwalze (16) liegen.

7. Vorrichtung nach Anspruch 5, dadurch gekennzeichnet, daß die Schutzbleche (30) schwenkbar im Rahmen (26) aufgehängt sind.

8. Verwendung der Vorrichtung nach einem der Ansprüche 1 bis 7 zum seitlichen Versetzen von auf einer Bodenfläche aufliegenden Kompostmiete.

## Claims

1. Machine for turning over compost heaps lying on the ground
having a rotating turning-over roller (16), which is arranged transversely to the direction of travel, for lifting up the compost, a blade (28) being arranged behind the turning-over roller, as seen in the direction of travel (a), running over the length of the turning-over roller,
characterized
in that the blade (28) is mounted pivotably in such a manner that a free end of the blade (28) drags along the ground, with the result that compost which has remained lying on the ground can be pushed together and collected by the turning-over roller (16),
in that the blade (28) is divided at least once over its length and in that each blade segment (28', 28'', 28''') is mounted so that it can be pivoted independently.

2. Machine according to Claim 1, characterized in that the blade (28) is directed at an acute angle to the ground.

3. Machine according to Claim 1 or 2, characterized in that the blade is arranged pivotably in a frame (26), and in that the frame (26) has at least one stop (34) which limits the pivoting movement of the blade (28) towards the ground.

4. Machine according to one of Claims 1 to 3, characterized in that the blade (28) has springs which exert a load in order to increase the bearing pressure.

5. Machine according to one of Claims 1 to 4, characterized in that the blade (28) is covered at the sides by protective plates (30).

6. Machine according to Claim 5, characterized in that the protective plates (30) are each mounted such that they can pivot about an axis which lies in front of the turning-over roller (16), as seen in the direction of travel.

7. Machine according to Claim 5, characterized in that the protective plates (30) are suspended pivotably in the frame (26).

8. Use of the machine according to one of Claims 1 to 7 for the lateral movement of compost heaps lying on the ground.

## Revendications

1. Dispositif pour retourner des tas de compost se trouvant sur une surface de sol, avec un rouleau de retournement tournant (16) disposé transversalement à la direction d'avance pour saisir le compost, où il est disposé, en regardant dans la direction d'avance (a), derrière le rouleau de retournement et en s'étendant sur la longueur de celui-ci, un bouclier (28), caractérisé en ce que le bouclier (28) est logé de manière pivotante de façon qu'une extrémité libre du bouclier (28) traîne sur la surface du sol, par quoi le compost resté sur la surface du sol peut être réuni par poussée et saisi par le rouleau de retournement (16), et en ce que le bouclier (28) est divisé sur sa longueur au moins une fois, et en ce que chaque segment de bouclier (28', 28'', 28''') est logé de manière pivotante en tant que tel.

2. Dispositif selon la revendication 1, caractérisé en ce que le bouclier (28) est orienté suivant un angle aigu à la surface du sol.

3. Dispositif selon la revendication 1 ou 2, caractérisé en ce que le bouclier est disposé de manière pivotante dans un cadre (26) et en ce que le cadre (26) présente au moins une butée (34) qui délimite le mouvement de pivotement du bouclier (28) vers le sol.

4. Dispositif selon l'une des revendications 1 à 3, caractérisé en ce que le bouclier (28) présente des ressorts de sollicitation pour augmenter la pression d'application.

5. Dispositif selon l'une des revendications 1 à 4, caractérisé en ce que le bouclier (28) est recouvert aux côtés par des tôles de protection (30).

6. Dispositif selon la revendication 5, caractérisé en ce que les tôles de protection (30) sont logées de manière pivotante respectivement autour d'un axe qui se situe dans la direction d'avance devant le rouleau de retournement (16).

7. Dispositif selon la revendication 5, caractérisé en ce que les tôles de protection (30) sont accrochées de manière pivotante dans le cadre (26).

8. Utilisation du dispositif selon l'une des revendication 1 à 7, pour le déplacement latéral d'un tas de compost reposant sur une surface du sol.
